# EUROPÄISCHE PATENTANMELDUNG

(11) **EP 3 666 070 A1**
(43) Veröffentlichungstag der Anmeldung: **17.06.2020**
(21) Anmeldenummer: 18212002.2
(22) Anmeldetag: 12.12.2018
(51) Int. Cl.: A01N 3/02, A01G 5/06

(54) **VERFAHREN ZUM HALTBARMACHEN WENIGSTENS EINER SCHNITTBLUME FÜR TRANSPORTZWECKE SOWIE DURCH DAS VERFAHREN ERHALTENE SCHNITTBLUME**

(71) Anmelder: Lidl Stiftung & Co. KG, 74172 Neckarsulm (DE)
(72) Erfinder: Benscheid, Jörn, 74172 Neckarsulm (DE)
(74) Vertreter: Weickmann & Weickmann PartmbB

(57) **Zusammenfassung**

Es wird ein Verfahren zum Haltbarmachen wenigstens einer Schnittblume mit einem eine Schnittfläche aufweisenden Blumenstiel (1) für Transportzwecke beschrieben. Ein solches Verfahren soll derart weitergebildet werden, dass einerseits keine aufwendigen Verpackungen mit wasserdicht gestalteten Wasser- bzw. Feuchtigkeitsreservoiren für den anschließenden Transport erforderlich sind sowie andererseits eine Durchführung des Verfahrens mittels allgemein erhältlicher und verfügbarer Hilfsmittel möglich ist. Zur Lösung dieser Aufgabe werden folgende Verfahrensschritte vorgeschlagen:
• Ein Bewässerungsschritt, der durch Eintauchen eines unteren Endes des Blumenstiels (1) in Wasser erfolgt, so dass der Blumenstiel (1) Wasser ziehen kann,
• Ein Benetzungsschritt, der durch Benetzen des unteren Endes (2) des Blumenstiels (1) mit flüssigem Wachs (3) erfolgt, und
• ein Abkühlungsschritt, der durch Abkühlen des Wachses (3) derart erfolgt, dass zumindest die Schnittfläche durch das abgekühlte Wachs (3) wasser- und luftdicht versiegelt ist.

## Beschreibung

### I. Anwendungsgebiet

Die vorliegende Erfindung betrifft ein Verfahren zum Haltbarmachen wenigstens einer Schnittblume mit einem eine Schnittfläche aufweisenden Blumenstiel für Transportzwecke sowie eine durch das Verfahren erhaltene Schnittblume. Es wird insbesondere unmittelbar nach dem Schneiden der Schnittblume an ihrem Ernteort oder bei einem Dienstleister (Bündelservice oder Packstation) und vorzugsweise gleichzeitig an einer Vielzahl von Schnittblumen durchgeführt. Im Folgenden steht der Begriff Produktionsort für den Ort, an dem der Dienstleister die Blumen aufbereitet, bindet und konfektioniert. Dieser Produktionsort kann, muss sich jedoch nicht von dem Ernteort unterscheiden, an welchem die Blumen gewachsen sind.

### II. Technischer Hintergrund

Es ist allgemein bekannt, dass Schnittblumen als "schnell verderbliche Ware" in möglichst kurzer Zeit nach dem Abschneiden an ihrem Ernteort in den Handel zu bringen sind. Die Ernte- bzw. Produktionsorte können weit entfernt von den Verkaufsorten liegen, an welchen die Schnittblumen an den Endkunden verkauft werden. Ernte- bzw. Produktionsort und Verkaufsort können sogar in verschiedenen Erdteilen liegen.

Während des Transports der Schnittblumen von dem Ernte- bzw. Produktionsort zu dem Verkaufsort ist es daher bekanntermaßen wichtig, den Schnittblumen genügend Wasser bzw. Feuchtigkeit zur Verfügung zu stellen, um ein Austrocknen während des Transports zu verhindern. Hierzu ist es bekannt, die Schnittblumen in Verpackungen zu transportieren, in welchen geeignete Wasser- oder Feuchtigkeitsreservoire vorhanden sind, welche die Schnittblumen mit genügend Wasser bzw. Feuchtigkeit versorgen. Die Gestaltung derartiger Verpackungen ist mechanisch aufwendig und damit teuer, da die Dichtigkeit der Wasser- bzw. Feuchtigkeitsreservoire gewährleistet sein muss.

Ein Verfahren zum Haltbarmachen von Schnittblumen ohne Wasserreservoir ist aus der EP 1 095 563 B1 bekannt. Bei diesem Verfahren werden die Blumenstiele der Schnittblumen zunächst in eine Lösung aus einem aliphatischen Alkohol und Myrrhe eingetaucht und anschließend getrocknet. Der Transport der Schnittblumen erfolgt dann in einem trockenen Zustand. Nachteilig ist hierbei, dass die spezielle vorgenannte Lösung bereitgestellt werden muss, die nicht alltäglich ist.

### III. Darstellung der Erfindung

### a) Technische Aufgabe

Es ist daher die Aufgabe der vorliegenden Erfindung, ein Verfahren zum Haltbarmachen wenigstens einer Schnittblume mit einem eine Schnittfläche aufweisenden Blumenstiel für Transportzwecke sowie eine durch das Verfahren erhaltenen Schnittblume zu schaffen, das bzw. die einerseits keine aufwendigen Verpackungen mit wasserdicht gestalteten Wasser- bzw. Feuchtigkeitsreservoiren für den anschließenden Transport erfordert sowie andererseits mittels allgemein erhältlicher und verfügbarer Hilfsmittel durchführbar bzw. herstellbar ist.

### b) Lösung der Aufgabe

Diese Aufgabe wird mit einem Verfahren mit den Merkmalen des Anspruchs 1 sowie mit einer Schnittblume mit den sich aus dem Anspruch 13 ergebenden Merkmalen gelöst. Weitere Ausgestaltungen des erfindungsgemäßen Verfahrens ergeben sich aus den Unteransprüchen.

Erfindungsgemäß wird ein Verfahren zum Haltbarmachen wenigstens einer Schnittblume mit einem eine Schnittfläche aufweisenden Blumenstiel für Transportzwecke, insbesondere für den Transport der Schnittblumen von ihrem Produktionsort zu dem Ort des Verkaufs an ihre Endkunden, vorgeschlagen. Das Verfahren ist vorzugsweise für die gleichzeitige Durchführung an einer Vielzahl von Schnittblumen vorgesehen, so dass nachfolgend stets von mehreren Schnittblumen, d.h. in der Pluralform, gesprochen wird. Eine Einschränkung des Verfahrens auf eine gleichzeitige Durchführung ausschließlich an mehreren Schnittblumen soll damit nicht verbunden sein. Das Verfahren umfasst folgende Schritte:
- Einen Bewässerungsschritt, der durch Eintauchen von unteren Enden der Blumenstiele in Wasser erfolgt, so dass die Blumenstiele insbesondere durch ihre Schnittflächen hindurch Wasser ziehen können.
- Einen Benetzungsschritt, der durch Benetzen der Oberflächen der unteren Enden der Blumenstiele mit flüssigem Wachs erfolgt.
- Einen Abkühlungsschritt, der durch Abkühlen des Wachses derart erfolgt, dass zumindest die Schnittflächen der Blumenstiele durch das abgekühlte Wachs wasser- und luftdicht versiegelt sind.

Der Bewässerungsschritt erfolgt vorzugsweise mit einem möglichst geringen zeitlichen Abstand nach dem Abschneiden bzw. Ernten der Schnittblumen auf dem Feld oder in dem Gewächshaus am Ernteort. Dadurch wird bestmögliche Frische der Schnittblumen erreicht. Während des Bewässerungsschritts ziehen die Blumenstiele Wasser und lagern dieses in sich ein. Auf diese Weise wird in den Blumenstielen ein internes Wasserreservoir ohne Lufteinschlüsse gebildet, das am Ende des Bewässerungsschritts mit einer Wassermenge gefüllt ist, welche die Schnittblumen über mehrere Tage hinweg versorgen kann bzw. der vorzeitigen Welke entgegenwirkt.

Im Rahmen des sich an den Bewässerungsschritt anschließenden Benetzungsschritts sowie des sich an den Benetzungsschritt anschließenden Abkühlungsschritts wird das mit Wasser gefüllte, interne Wasserreservoir in den Blumenstielen wasser- und damit auch luftdicht versiegelt, so dass es zur Umgebungsluft hin hermetisch abgedichtet ist. Das in dem internen Wasserreservoir vorhandene Wasser kann somit während des Transports nicht verloren gehen. Insbesondere kann das interne Wasserreservoir nicht durch Luftkontakt austrocknen.

Das erfindungsgemäße Versiegeln zumindest der Schnittflächen der Blumenstiele wirkt insbesondere einem Abreißen des Kapillarstromes (Wasserfadens) in den Leitbahnen des Blumenstiels entgegen. Dieses Abreißen würde unmittelbar zu ersten Welkesymptomen führen. Da das interne Wasserreservoir keinen Luftkontakt hat, kann keine Luft in die Leitbahnen des Blumenstiels eindringen, wodurch der Kapillarstrom abreißen würde. Dem Abreißen könnte in vergleichbarer Weise nur durch die Bereitstellung eines Wasserbades, in welches die Blumenstiele während des Transports eintauchen, entgegen gewirkt werden. Ein externes Wasserbad soll jedoch erfindungsgemäß vermieden werden. Ein Feuchtigkeitsreservoir in Form eines feuchten Vlieses oder eines feuchten Tuches, in welches die Blumenstiele eingewickelt werden, kann nicht verhindern, dass die Blumenstiele durch ihre Schnittflächen hindurch Luft ziehen und dadurch der Kapillarstrom in den Leitbahnen abreißt.

Im Übrigen schränkt die erfindungsgemäße Versiegelung einen Wasserverlust durch Verdunstung von Wasser über die Blumenstraußoberfläche ein. Dem Verdunstungssog, der Wasser in den Blumenstielen nach oben ziehen will, wird durch die hermetische Abdichtung zumindest der Schnittflächen der Blumenstiele entgegen gewirkt, da weder Luft noch Wasser an den unteren Enden der Blumenstiele angesogen werden bzw. nachströmen kann.

Ein Vorteil des erfindungsgemäßen Verfahrens besteht darin, dass trotz eines Wasserreservoirs, das in Form des internen Wasserreservoirs vorhanden ist, ein sogenannter trockener Versand der Schnittblumen an den Verkaufsort erfolgen kann, an welchem Endkunden die Schnittblumen erwerben. Die nach Durchführung des erfindungsgemäßen Verfahrens an den unteren Enden der Blumenstiele vorhandenen Wachshüllen oder Wachskappen können während sämtlicher Transportvorgänge der Schnittblumen, d.h. während der Transporte von dem Produktionsort zum Großhändler, vom Großhändler zum Einzelhändler und vom Einzelhändler in die Wohnung des Endkunden, an den Blumenstielen verbleiben. Aufwendige Versandverpackungen, die wasserdicht gestaltet werden müssten, sind nicht erforderlich.

Ein weiterer Vorteil des erfindungsgemäßen Verfahrens besteht darin, dass verflüssigbares Wachs für die Durchführung des Verfahrens allgemein erhältlich und verfügbar ist. Das Verfahren benötigt keine aufwendig hergestellten Zutaten bzw. Hilfsmittel zu seiner Durchführung.

Das erfindungsgemäße Verfahren kann grundsätzlich manuell oder maschinell durchgeführt werden. Für die Produktion und den Transport großer Mengen von Schnittblumen ist eine maschinelle Durchführung des Verfahrens bevorzugt.

Das Benetzen der unteren Enden der Blumenstiele mit dem flüssigen Wachs erfolgt vorzugsweise durch Eintauchen der vorgenannten Enden in ein Tauchbad aus dem flüssigen Wachs. Alternativ ist denkbar, die unteren Enden der Blumenstiele mit dem flüssigen Wachs zu übergießen oder zu besprühen.

Das Abkühlen des nach dem Benetzungsschritt seitlich an den unteren Enden der Blumenstiele sowie an den Schnittflächen haftenden Wachses kann dadurch erfolgen, dass die unteren Enden der Blumenstiele einfach der Umgebungsluft ausgesetzt werden. Anstelle dieser passiven Abkühlung kann das Wachs alternativ aktiv abgekühlt werden, beispielsweise durch Anblasen mit Kühlluft oder durch Inkontaktbringen der unteren Enden der Blumenstiele mit Wasser. Diese Wasserkühlung erfolgt vorzugsweise durch Eintauchen der mit Wachs benetzten unteren Enden der Blumenstiele in ein Wasserbad.

Um eine zuverlässige wasser- sowie luftdichte Versiegelung der unteren Enden der Blumenstiele zu erreichen, können der Benetzungsschritt und der Abkühlungsschritt mehrfach hintereinander durchgeführt werden. Dadurch können zwei, drei oder mehr versiegelnde Wachsschichten aufeinander aufgebaut werden.

Vorzugsweise wird das flüssige Wachs vor dem Benetzungsschritt auf eine Temperatur von 60°C - 80°C aufgeheizt. Als besonders vorteilhaft hat sich für die meisten Wachsarten eine Temperatur von 68°C bis 72°C erwiesen. Bevorzugt wird im Rahmen des erfindungsgemäßen Verfahrens ein Paraffinwachs (nicht toxisch) verwendet.

Das Füllen des natürlichen, internen Wasserreservoirs in den Blumenstielen braucht einige Zeit. Das Eintauchen der unteren Enden der Blumenstiele in Wasser im Rahmen des Bewässerungsschritts erfolgt vorzugsweise über eine Dauer von wenigstens 6 Stunden. Als besonders vorteilhaft hat sich ein Eintauchen im Rahmen des Bewässerungsschritts über eine Dauer von 10-14 Stunden erwiesen.

In vorteilhafter Weise kann das zur Versiegelung verwendete Wachs in einer zu den Blumenstielen kontrastreichen Farbe eingefärbt sein, wie beispielsweise in Rot, Gelb oder Blau. Ausgehend von den Schnittflächen können die Blumenstiele dann über eine bestimmte Benetzungshöhe mit dem kontrastreich eingefärbten, flüssigen Wachs benetzt werden, welche ihrer Größe nach der empfohlenen Länge von Stielabschnitten entspricht, die beim erstmaligen Anschneiden der Blumenstiele von Letzteren abgeschnitten werden sollen, bevor die Schnittblumen in eine Vase mit Wasser gestellt werden.

Für den Fall, dass die empfohlenen Längen von abzuschneidenden Stielabschnitten bei unterschiedlichen Blumenarten verschieden groß sind, kann die Benetzungshöhe im Rahmen des erfindungsgemäßen Verfahrens entsprechend verschieden groß gewählt werden. Dem laienhaften, unkundigen Endkunden, der die Schnittblumen bei sich zuhause in eine mit Wasser gefüllte Vase stellen will, kann somit ein wertvoller Pflegehinweis für seine Schnittblumen an die Hand gegeben werden, der deren Lebensdauer verlängert.

Erfindungsgemäß wird auch eine durch das erfindungsgemäße Verfahren erhaltene Schnittblume vorgeschlagen, die an dem unteren Ende des Blumenstiels eine erfindungsgemäß hergestellte Wachshülle oder Wachskappe zum wasserdichten und luftdichten Versiegeln insbesondere der Schnittfläche an dem Blumenstiel aufweist. Die Schnittblume weist außerdem ein durch den Bewässerungsschritt erfindungsgemäß mit Wasser gefülltes, internes Wasserreservoir in ihrem Blumenstiel auf.

### c) Ausführungsbeispiel

Nachfolgend werden ein Ausführungsbeispiel des erfindungsgemäßen Verfahrens sowie erfindungsgemäßer Schnittblumen beispielhaft anhand der beigefügten Zeichnung beschrieben. Es zeigt:

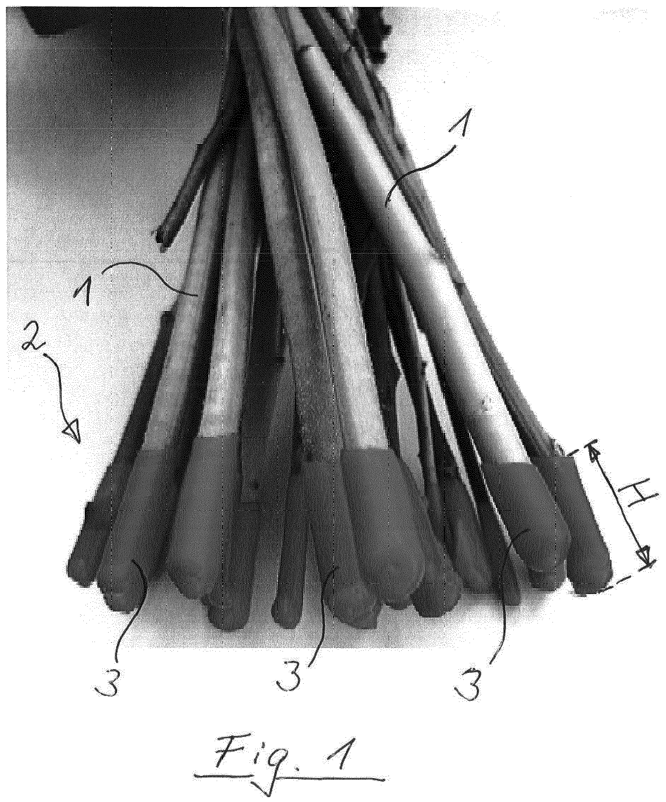

- Fig. 1:: Blumenstiele eines Blumenstraußes aus Schnittblumen, die durch das erfindungsgemäße Verfahren erhalten wurden.

Im Rahmen des Ausführungsbeispiels wurde das erfindungsgemäße Verfahren an einem Blumenstrauß durchgeführt, der aus Gerbera, Rosen, Chrysanthemen und diversem Bindegrün bestand. Die unteren Enden 2 der Blumenstiele 1 wurden während des Bewässerungsschritts für zwölf Stunden bei einer Raumtemperatur von ca. 4-6°C in Wasser mit einer Temperatur von ca. 10° Celsius eingetaucht. Die Eintauchtiefe betrug ca. 10 cm.

Bei dem für den Benetzungsschritt benötigten Wachs handelte es sich um Paraffinwachs (nicht toxisch). Es wurde auf ca. 70° Celsius aufgeheizt. Darüber hinaus wurde das Wachs mit rotem Farbstoff eingefärbt. Der Benetzungsschritt wurde zunächst ein erstes Mal durch Eintauchen der unteren Enden 2 der Blumenstiele 1 in ein Tauchbad aus dem flüssigen Wachs eingetaucht. Nach ca. 2-3 Sekunden wurden die unteren Enden 2 der Blumenstiele 1 aus dem Tauchbad herausgehoben und für ca. 2-3 Sekunden durch Eintauchen in ein Wasserbad über den mit Wachs benetzten Stielabschnitt hinaus gekühlt, wobei die Temperatur des Wasserbades ca. 10°C betrug.

Anschließend wurden der voranstehend beschriebene Benetzungsschritt und der voranstehend beschriebene Abkühlungsschritt ein zweites Mal in derselben Weise durchgeführt. Nach der zweiten Abkühlung im Wasserbad wurden die in Fig. 1 gezeigten Blumenstiele 1 erhalten.

Wie in Fig. 1 zu erkennen ist wiesen die Blumenstiele 1 an Ihren unteren Enden 2 jeweils aus dem Wachs 3 bestehende Wachshüllen oder Wachskappen auf, welche die in Fig. 1 von dem Wachs 3 bedeckten und daher nicht sichtbaren Schnittflächen der Blumenstiele 1 wasser- und luftdicht versiegeln.

Die Wachshüllen oder Wachskappen weisen eine in Fig. 1 gekennzeichnete Benetzungshöhe H von ca. 2 cm auf. Aufgrund der roten Farbe des Wachses 3 ist gut zu erkennen, auf welcher Höhe der Blumenstiele 1 die Wachshüllen oder Wachskappen enden. An den oder knapp oberhalb der Stellen, an welchen die roten Wachshüllen oder Wachskappen enden, kann der Endkunde vor dem Einstellen des Schnittblumenstraußes in eine Vase die Blumenstiele 1 abschneiden, so dass danach keine Stielabschnitte mehr mit rotem Wachs 3 vorhanden sind.

Auf diese Weise werden neue, offene Schnittflächen an den Blumenstielen 1 erzeugt, durch welche hindurch die Blumenstiele 1 Wasser aus der Vase ziehen können.

Der wie voranstehend beschrieben erhaltene Blumenstrauß wurde hinsichtlich seiner Haltbarkeit einem Test unterzogen. Der Blumenstrauß wurde bei einer Raumtemperatur von ca. 19-21 °C ohne Kontakt mit externem Wasser gelagert. Im Rahmen des Tests konnte bei den Schnittblumen selbst nach 3 bis 4 Tagen noch keine Welke festgestellt werden.

Das erfindungsgemäße Verfahren stellt zwar einen zusätzlichen Arbeitsschritt dar, der Zeit und Geld kostet, jedoch sind seine Kosten deutlich geringer als die Einsparungen, die sich daraus ergeben, dass vereinfachte Verpackungen für den Trockentransport der Blumensträuße verwendet werden können.

### BEZUGSZEICHENLISTE

- 1: Blumenstiel
- 2: Unteres Ende des Blumenstiels
- 3: Wachs

- H: Benetzungshöhe

## Patentansprüche

1. Verfahren zum Haltbarmachen wenigstens einer Schnittblume mit einem eine Schnittfläche aufweisenden Blumenstiel (1) für Transportzwecke, umfassend
• einen Bewässerungsschritt, der durch Eintauchen eines unteren Endes (2) des Blumenstiels (1) in Wasser erfolgt, so dass der Blumenstiel (1) Wasser ziehen kann,
• einen Benetzungsschritt, der durch Benetzen des unteren Endes (2) des Blumenstiels (1) mit flüssigem Wachs (3) erfolgt, und
• einen Abkühlungsschritt, der durch Abkühlen des Wachses (3) derart erfolgt, dass zumindest die Schnittfläche durch das abgekühlte Wachs (3) wasser- und luftdicht versiegelt ist.

2. Verfahren nach Anspruch 1,
**dadurch gekennzeichnet, dass**
das Benetzen durch Eintauchen des unteren Endes (2) des Blumenstiels (1) in ein Tauchbad aus flüssigem Wachs erfolgt.

3. Verfahren nach Anspruch 1 oder 2,
**dadurch gekennzeichnet, dass**
das Abkühlen dadurch erfolgt, dass das untere Ende (2) des Blumenstiels (1) mit dem flüssigen Wachs (3) der Umgebungsluft ausgesetzt wird.

4. Verfahren nach Anspruch 1 oder 2,
**dadurch gekennzeichnet, dass**
das Abkühlen dadurch erfolgt, dass das untere Ende (2) des Blumenstiels (1) mit dem flüssigen Wachs (3) mit Wasser in Kontakt gebracht wird.

5. Verfahren nach Anspruch 4,
**dadurch gekennzeichnet, dass**
das untere Ende (2) des Blumenstiels (1) mit dem flüssigen Wachs (3) in ein Wasserbad eingetaucht wird.

6. Verfahren nach einem der vorangehenden Ansprüche,
**dadurch gekennzeichnet, dass**
der Benetzungsschritt und der Abkühlungsschritt mehrfach hintereinander durchgeführt werden.

7. Verfahren nach einem der vorangehenden Ansprüche,
**dadurch gekennzeichnet, dass**
das flüssige Wachs (3) vor dem Benetzen auf eine Temperatur von 60°C bis 80°C aufgeheizt wird.

8. Verfahren nach einem der vorangehenden Ansprüche 1 bis 6,
**dadurch gekennzeichnet, dass**
das flüssige Wachs (3) vor dem Benetzen auf eine Temperatur von 68°C bis 72°C aufgeheizt wird.

9. Verfahren nach einem der vorangehenden Ansprüche,
**dadurch gekennzeichnet, dass**
es sich bei dem Wachs (3) um ein Paraffinwachs handelt.

10. Verfahren nach einem der vorangehenden Ansprüche,
**dadurch gekennzeichnet, dass**
das Eintauchen im Rahmen des Bewässerungsschritts über eine Dauer von wenigstens 6 Stunden erfolgt.

11. Verfahren nach einem der vorangehenden Ansprüche 1 bis 9,
**dadurch gekennzeichnet, dass**
das Eintauchen im Rahmen des Bewässerungsschritts über eine Dauer von 10 bis 14 Stunden erfolgt.

12. Verfahren nach einem der vorangehenden Ansprüche,
**dadurch gekennzeichnet, dass**
das Wachs (3) in einer zu dem Blumenstiel (1) kontrastreichen Farbe eingefärbt ist und der Blumenstiel (1) ausgehend von der Schnittfläche über eine Benetzungshöhe (H) hinweg mit dem flüssigen Wachs (3) benetzt wird, welche ihrer Größe nach der Länge eines Stielabschnittes entspricht, der beim erstmaligen Anschneiden des Blumenstiels (3) von Letzterem abgeschnitten werden soll.

13. Schnittblume erhalten durch ein Verfahren nach einem der vorangehenden Ansprüche.
